# EUROPÄISCHE PATENTSCHRIFT

(11) **EP 2 245 282 B1**
(45) Veröffentlichungstag und Bekanntmachung des Hinweises auf die Patenterteilung: **12.07.2017**
(21) Anmeldenummer: 09702075.4
(22) Anmeldetag: 07.01.2009
(51) Int. Cl.: F02B 39/00, F02B 37/18

(54) **ELEKTRONISCHER STELLANTRIEB ZUR BETÄTIGUNG EINES VENTILS IN EINEM TURBOLADER FÜR EIN KRAFTFAHRZEUG**
ELECTRONIC ACTUATOR FOR ACTUATING A VALVE IN A TURBO CHARGER OF A MOTOR VEHICLE
ACTIONNEUR ÉLECTRONIQUE POUR ACTIONNER UNE SOUPAPE DANS UN TURBOCOMPRESSEUR DE VÉHICULE À MOTEUR

(30) Priorität: 16.01.2008 DE 102008004689
(43) Veröffentlichungstag der Anmeldung: 03.11.2010
(73) Patentinhaber: Continental Automotive GmbH, 30165 Hannover (DE)
(72) Erfinder: ISSLEIB, Rainer, 60489 Frankfurt (DE); KREMINA, Vinzent, 60316 Frankfurt (DE)
(86) Internationale Anmeldenummer: PCT/EP2009/050104
(87) Internationale Veröffentlichungsnummer: WO 2009/090128

(56) Entgegenhaltungen:
- EP-A2- 1 199 517
- WO-A1-03/023194
- DE-A1- 3 327 946
- DE-A1- 4 423 313
- DE-A1-102004 003 211
- GB-A- 2 163 076
- JP-A- 62 093 428
- ANONYMOUS: "RACO-ELEKTROZYLINDER" RACO PRODUKTLINIENKATALOG, [Online] Juli 2007 (2007-07), XP002527071 Gefunden im Internet: URL:http://www.raco.de/pdf/2_0_d.pdf> [gefunden am 2009-04-28]

## Beschreibung

Die Erfindung bezieht sich auf einen elektronischen Stellantrieb zur Betätigung eines Ventils in einem Turbolader für ein Kraftfahrzeug, der mindestens eine selbsthemmende Spindel aufweist, die drehbar gelagert ist und die mit einer in der Längsachse der mindestens einen Spindel verschiebbar angeordneten Spindelmutter im Eingriff steht.

Stellantriebe zur Betätigung von Ventilen in Turboladern für Kraftfahrzeuge sind bekannt. Die Anordnung der Ventile ist dabei notwendig, um die Luftmenge im Turbolader in Abhängigkeit von den Betriebsbedingungen zu regeln. Die Ventile stehen dabei in der Regel mit Bypassleitungen in Verbindung, über die gegebenenfalls überschüssige Luftmengen oder Abgasmengen abgeführt werden können. Zur Betätigung der Ventile bedient man sich in der Regel nach dem Stand der Technik so genannter pneumatischer Stellantriebe, die bei einem oberen Grenzwert des Druckes im Turbolader das jeweilige Ventil öffnen und so den Bypass zur Abfuhr der überschüssigen Luftmenge beziehungsweise Abgasmenge freigeben. Dabei werden Kräfte gegen Federsysteme aufgebracht und auf den Einsatz von Elektromotoren verzichtet. Fällt anschließend der Druck im Turbolader auf einen speziellen Grenzwert ab, wird das jeweilige Ventil durch Federkräfte geschlossen. Bei diesen pneumatischen Stellantrieben ist nachteilig, dass die Ventile geöffnet beziehungsweise geschlossen werden, ohne dass es möglich ist, Positionen des Ventils gezielt zwischen der vollständig geöffneten Position und der vollständig geschlossenen Position einzustellen. Um solche Zwischenpositionen des Ventils einstellen zu können, bedient man sich nach dem Stand der Technik ferner elektrisch bestromter Stellantriebe. Diese haben jedoch den Nachteil, dass die Elektromotoren, die den elektrischen Stellantrieb mit elektrischer Energie versorgen, in jeder Position des Ventils kontinuierlich mit elektrischem Strom beaufschlagt werden müssen. Dies hat zur Folge, dass der Elektromotor entsprechend hoher Leistungen ausgelegt werden muss. Dabei ist ferner nachteilig, dass ein entsprechend großer Bauraum für den relativ groß dimensionierten Elektromotor geschaffen werden muss.

Aus der GB 2 163 076 A sind Stellantriebe mit Spindeln bekannt, wobei mehrere Spindeln und Elektromotoren zum Betätigen eines zu bewegenden Elements notwendig sind.

Der Erfindung liegt die Aufgabe zugrunde, einen elektronischen Stellantrieb zur Betätigung eines Ventils in einem Turbolader für ein Kraftfahrzeug zu schaffen, mit dem sich Bauraum einsparen lässt und der Stromverbrauch möglichst niedrig gehalten werden kann.

Die der Erfindung zugrunde liegende Aufgabe wird dadurch gelöst, dass der Elektromotor im elektronischen Stellantrieb angeordnet ist, der Elektromotor und die selbsthemmende Spindel dieselbe Längsachse aufweisen, dass die selbsthemmende Spindel die einzige selbsthemmende Spindel ist, an deren einem Ende, das dem Elektromotor zugewandt ist, der Signalgeber angeordnet ist.

Die Selbsthemmung der Spindel wird ingenieurmäßig über die Steigung der Flanken der Spindel entsprechend ausgelegt. Die Spindelmutter ist mit dem Ventil beispielsweise über eine Ventilstange verbunden, so dass sich alle gewünschten Positionen des Ventils zwischen der vollständig geöffneten Position und der vollständig geschlossenen Position des Ventils auf relativ einfache Weise einstellen lassen. Es hat sich in überraschender Weise gezeigt, dass durch die Anordnung einer selbsthemmenden Spindel im elektronischen Stellantrieb eine kontinuierliche Bestromung des Elektromotors während der Aufrechterhaltung einer speziellen Position des Ventils vermieden werden kann, was zu einer Reduzierung des Stromverbrauchs führt. Aufgrund dieser Tatsache ist es möglich, den Elektromotor in vorteilhafter Weise kleiner auszulegen. Dies wiederum wirkt sich direkt in vorteilhafter Weise auf eine Verkleinerung des Bauraums aus. Der elektronische Stellantrieb arbeitet ökonomisch besonders vorteilhaft, was zu einer Verbesserung des Gesamtwirkungsgrades des elektronischen Stellantriebs und damit zu einer vorteilhaften Reduktion von CO₂ im Betrieb des Kraftfahrzeugs führt.

Zudem lässt sich der elektronische Stellantrieb besonders kompakt ausführen, was seine Fertigung erleichtert und zu einer weiteren Einsparung von erforderlichem Bauraum führt. Der Vorteil besteht darin, dass durch den Signalgeber der Elektromotor entsprechend gesteuert beziehungsweise geregelt wird. Seine Anordnung an dem einen Ende der einzigen selbsthemmenden Spindel erleichtert zusätzlich die kompakte Ausgestaltung des elektronischen Stellantriebs, so dass sich der erforderliche Bauraum für den elektronischen Stellantrieb minimieren lässt.

Nach einer bevorzugten Ausgestaltung der Erfindung ist vorgesehen, dass die Spindelmutter mit dem als Ventil angeordneten Ventil in der Abgasleitung des Turboladers in Verbindung steht. Die Verbindung der Spindelmutter mit dem Ventil in der Abgasleitung kann dabei direkt oder indirekt über weitere Zwischenteile erfolgen. Die Verbindung des elektronischen Stellantriebs mit einem Ventil in der Abgasleitung des Turboladers erleichtert in besonders vorteilhafter Weise die Regelung der Luftmenge im Turbolader, da es aufgrund der Betriebsbedingungen in der Abgasleitung des Turboladers besonders vorteilhaft ist, die Regelung der Luftmenge über die Anordnung eines Bypasses um die Abgasturbine vorzunehmen. Nachteile der Einflüsse im Brennraum des Motors werden so in vorteilhafter Weise minimiert.

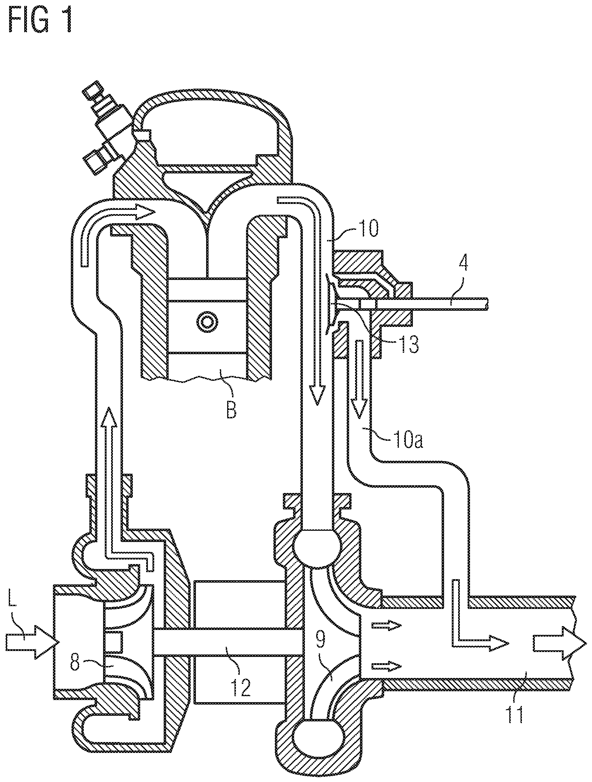

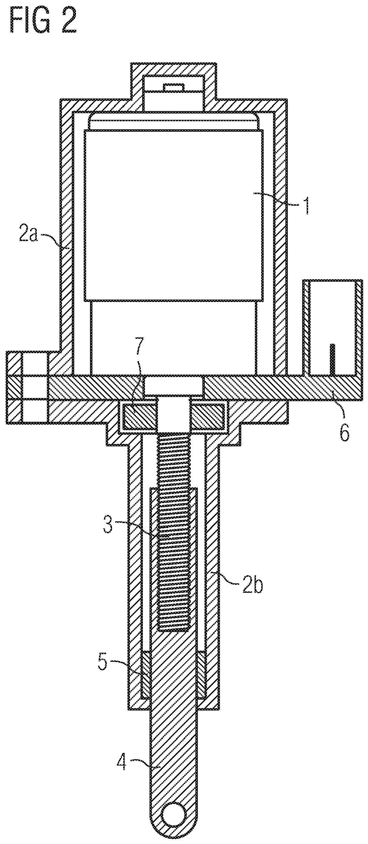

Die Erfindung wird nachfolgend anhand der Zeichnung (Fig. 1, Fig. 2) näher und beispielhaft erläutert.
- Fig. 1: zeigt einen Turbolader im Schnitt mit der Anordnung des Ventils in der Abgasleitung.
- Fig. 2: zeigt den elektronischen Stellantrieb im Längsschnitt.

In Fig. 1 ist der Turbolader für ein Kraftfahrzeug im Schnitt mit der Anordnung des Ventils 13, das über den elektronischen Stellantrieb (nicht dargestellt) betätigt wird, schematisch vereinfacht dargestellt. Dem Verdichter 8 wird eine Luftmenge L zugeführt, die anschließend in den Brennraum B des Motors gelangt. Die Abgase werden über die Abgasleitung 10 aus dem Brennraum des Motors abgeführt und in der Regel über die Abgasturbine 9 des Turboladers dem Auspuff 11 zugeführt. Der Verdichter 8 und die Abgasturbine 9 stehen dabei über eine drehbar gelagerte Antriebswelle 12 in Verbindung. Steigt der Druck innerhalb des Turboladers zu stark an, ist es erforderlich, das Ventil 13, das in der Abgasleitung 10 angeordnet ist, über die Spindelmutter 4 des elektronischen Stellantriebs zu betätigen. Über die Spindelmutter 4 wird das Ventil 13 in Abhängigkeit von der Höhe des überschüssigen Druckes im Turbolader teilweise bis vollständig geöffnet, so dass eine speziell vorbestimmte Menge an Abgas über die Bypassleitung 10a direkt in den Auspuff 11 gelangen kann. Wird dabei die Position des Ventils 13 eine gewisse Zeit lang beibehalten, ist es nicht erforderlich, den elektronischen Stellantrieb kontinuierlich mit elektrischem Strom zu versorgen, so dass der Verbrauch an elektrischem Strom relativ gering gehalten werden kann. Dies ermöglicht die vorteilhafte Anordnung mindestens einer selbsthemmenden Spindel (nicht dargestellt), die drehbar gelagert ist und die mit einer in der Längsachse der mindestens einen Spindel verschiebbar angeordneten Spindelmutter 4 im Eingriff steht. Auf diese Weise ist eine kontinuierliche Regelung der Luftmenge innerhalb des Turboladers bei gleichzeitiger Erhöhung des Gesamtwirkungsgrades, die direkt zu einer Reduktion an CO₂ führt, auf einfache Weise möglich.

In Fig. 2 ist der elektronische Stellantrieb zur Betätigung eines Ventils (nicht dargestellt) in einem Turbolader für ein Kraftfahrzeug im Längsschnitt dargestellt. Er weist eine einzige selbsthemmende Spindel 3 auf, die drehbar gelagert ist und die mit einer in der Längsachse der mindestens einen Spindel 3 verschiebbar angeordneten Spindelmutter 4 im Eingriff steht. Die Spindelmutter 4 wird dabei durch das Lager 5 geführt. Die eine selbsthemmende Spindel 3 wird durch einen Elektromotor 1 angetrieben, der über den Signalgeber 7 entsprechend angesteuert wird. Der Elektromotor 1 ist in einem ersten Gehäuseteil 2a des elektronischen Stellantriebs angeordnet. Die selbsthemmende Spindel 3 ist zusammen mit der Spindelmutter 4 in einem zweiten Gehäuseteil 2b des elektronischen Stellantriebs angeordnet. Der Elektromotor 1 und die selbsthemmende Spindel 3 weisen dieselbe Längsachse auf, wodurch der elektronische Stellantrieb kompakt baut und nur einen sehr geringen Bauraum benötigt. Die Bestromung des Elektromotors 1 erfolgt über den elektronischen Anschluss 6. An dem einen Ende der selbsthemmenden Spindel 3, das dem Elektromotor 1 zugewandt ist, ist der Signalgeber 7 angeordnet, was sich ebenfalls positiv auf die kompakte Bauweise des elektronischen Stellantriebs auswirkt. Besonders vorteilhaft ist es, wenn die Spindelmutter 4 mit einem als Ventil (nicht dargestellt) angeordneten Ventil in der Abgasleitung (nicht dargestellt) des Turboladers in Verbindung steht. Dies kann direkt oder indirekt erfolgen. Der elektronische Stellantrieb arbeitet mit minimaler Energiezufuhr, da der Elektromotor 1 während der Aufrechterhaltung einer jeden Ventilposition durch die selbsthemmende Wirkung der selbsthemmenden Spindel 3 nicht kontinuierlich bestromt werden muss. Dies wirkt sich direkt vorteilhaft auf den Gesamtwirkungsgrad aus und dient dabei gleichzeitig der Reduzierung der CO₂-Menge während des Betriebes des Kraftfahrzeuges.

## Patentansprüche

1. Ein ein Ventil (13) in einem Turbolader für ein Kraftfahrzeug betätigender elektronischer Stellantrieb, der eine selbsthemmende Spindel (3) aufweist, die drehbar gelagert ist und die mit einer in der Längsachse der einen Spindel (3) verschiebbar angeordneten Spindelmutter (4) im Eingriff steht, **dadurch gekennzeichnet, dass** ein Elektromotor (1) im elektronischen Stellantrieb angeordnet ist, der Elektromotor (1) und die selbsthemmende Spindel (3) dieselbe Längsachse aufweisen, dass die selbsthemmende Spindel (3) die einzige selbsthemmende Spindel (3) ist, an deren einem Ende, das dem Elektromotor (1) zugewandt ist, der Signalgeber (7) angeordnet ist.

2. Elektronischer Stellantrieb nach Anspruch 1, bei dem die Spindelmutter (4) mit dem als Ventil (13) angeordneten Ventil in der Abgasleitung (10) des Turboladers in Verbindung steht.

## Claims

1. Electronic actuator drive which activates a valve (13) in a turbocharger for a motor vehicle and which has a self-locking spindle (3) which is rotatably mounted and which is in engagement with a spindle nut (4) which is displaceably arranged in the longitudinal axis of the one spindle (3), **characterized in that** an electric motor (1) is arranged in the electronic actuator drive, and the electric motor (1) and the self-locking spindle (3) have the same longitudinal axis, **in that** the self-locking spindle (3) is the only self-locking spindle (3) at whose one end which faces the electric motor (1) the signal generator (7) is arranged.

2. Electronic actuator drive according to Claim 1 in which the spindle nut (4) is connected to the valve in the exhaust line (10) of the turbocharger, arranged as the valve (13).

## Revendications

1. Actionneur électronique commandant une soupape (13) dans un turbocompresseur pour un véhicule automobile, qui présente une broche autobloquante (3) qui est supportée à rotation et qui est en prise avec un écrou de broche (4) disposé de manière à pouvoir coulisser dans l'axe longitudinal de la broche (3), **caractérisé en ce qu'**un moteur électrique (1) est disposé dans l'actionneur électronique, le moteur électrique (1) et la broche autobloquante (3) présentent le même axe longitudinal, **en ce que** la broche autobloquante (3) est la broche autobloquante unique (3) au niveau d'une extrémité de laquelle, tournée vers le moteur électrique (1), est disposé le transducteur de signal (7).

2. Actionneur électronique selon la revendication 1, dans lequel l'écrou de broche (4) est en liaison avec la soupape disposée en tant que soupape (13) dans la conduite de gaz d'échappement (10) du turbocompresseur.
